# EUROPÄISCHE PATENTANMELDUNG

(11) **EP 2 592 365 A2**
(43) Veröffentlichungstag der Anmeldung: **15.05.2013**
(21) Anmeldenummer: 12192032.6
(22) Anmeldetag: 09.11.2012
(51) Int. Cl.: F24J 2/52, H01L 31/042

(54) **Endklemmen für gerahmte Photovoltaikmodule**

(30) Priorität: 10.11.2011 DE 102011118560
(71) Anmelder: Creotecc GmbH, 79111 Freiburg (DE)
(72) Erfinder: Hort, Christopher, 79312 Emmendingen (DE)
(74) Vertreter: Witte, Weller & Partner

(57) **Zusammenfassung**

Endklemmen-System (10) für PV-Module (12) mit einem Klemmwinkel (18), einem Spannbolzen (22) und einem Basiselement (20; 20'), wobei das Basiselement (20) längsverschieblich und formschlüssig in ein Tragprofil (16) eingreift, auf dem die PV-Module (12) verspannt befestigt werden, wobei der Klemmwinkel (18) einen Halteschenkel (24) und einen Spannschenkel (26) aufweist, wobei der Halteschenkel (24) eine Öffnung (48) hat, durch die der Spannbolzen (22) geführt ist, wobei das Basiselement (20) auf einer modulabgewandten Seite (68) eine Ausnehmung (32) mit mehreren Stufen (34) aufweist, wobei die Stufen (34) ausgebildet sind, ein freies Ende des Spannschenkels (26) oder eine korrespondierende Verzahnung (30) auf einer modulzugewandten Seite (82) des Spannschenkels (26) höhenverstellbar (72) abzustützen.

## Beschreibung

Die vorliegende Erfindung betrifft ein Endklemmen-System zur randseitigen Befestigung von Photovoltaikmodulen ("PV-Modulen") auf Tragprofilen, wobei das System einen Klemmwinkel, einen Spannbolzen und ein Basiselement aufweist.

Ein System mit der gleichen Funktion wird in dem europäischen Patent EP 2 132 495 B2 beschrieben. Bei der Befestigung von PV-Modulen, die üblicherweise in Reihen nebeneinander auf Tragprofilen liegen, werden Klemmen eingesetzt, um die PV-Module auf den Tragprofilen zu fixieren. Klemmen, die zwischen benachbarten PV-Modulen angeordnet sind, werden als Mittelklemmen bezeichnet. Klemmen, die an einem äußeren Rand eines PV-Modul-Felds oder einer PV-Modul-Reihe angeordnet sind, werden als Endklemmen bezeichnet. Eine Endklemme hält lediglich ein einziges PV-Modul, das kein benachbartes PV-Modul hat, mit dem es gemeinsam gehalten werden könnte, wie es bei einer Mittelklemme der Fall ist.

Das Dokument DE 20 2009 010 487 U1 zeigt eine weitere Endklemme zur Befestigung eines gerahmten PV-Moduls. Das Dokument DE 20 2006 013 261 U1 zeigt eine Befestigung für Solarmodule. Das Dokument DE 10 2006 000 089 A1 zeigt eine Befestigungsvorrichtung für die Befestigung von Solarpaneelen an einer Montageschiene und insbesondere eine sogenannte Mittelklemme. Das Dokument DE 20 2004 015 815 U1 zeigt eine Befestigungsvorrichtung für mindestens einen Sonnenkollektor. Das Dokument DE 20 2011 001 761 U1 zeigt eine weitere Mittelklemme.

Die EP 2 132 495 B2 beschreibt eine mehrteilige Endklemme. Diese Endklemme, die auch als Befestigungseinrichtung für außenliegende Rahmenabschnitte von Solarmodulen bezeichnet wird, weist ein Z-förmig ausgebildetes Klemmteil und einen Klemmteilträger auf. Der Klemmteilträger hat einen rhomboiden Querschnitt und wird in Längsrichtung des Tragprofils auf das Tragprofil aufgeschoben. Das Z-förmige Klemmteil ist als Doppelwinkel ausgebildet, der zwei in entgegengesetzte Richtung weisende horizontale Schenkel aufweist, die über einen vertikalen Steg miteinander verbunden sind. Der erste horizontale Schenkel liegt auf einer Oberseite der Solarmodule auf. Der zweite horizontale, untere Schenkel dient zur Aufnahme eines Gewindebolzens. Der untere Schenkel und der Gewindebolzen befinden sich im montierten Zustand der vorbekannten Endklemme innerhalb des Klemmteilträgers. Ein Drehen des Gewindebolzens in Spannrichtung bewirkt, dass das Z-förmige Klemmteil nach unten bewegt wird, so dass sich der obere Schenkel das PV-Modul auf das Tragprofil presst. Der Kopf des Gewindebolzens stützt sich während des Verspannend innen am Deckel des Klemmteilträgers ab. Das Bewegen des Klemmteilträgers nach unten bewirkt eine Gegenkraft auf den Gewindebolzen nach oben, die vom Klemmteilträger kompensiert wird, der sich entgegen der noch oben wirkenden Kraft über Widerhaken im unteren Bereich des Klemmteilträgers an überragenden Seitenrändern der Oberseite des Tragprofils festhält. Insbesondere aufgrund der rhomboiden Gestalt des Klemmteilträgers wird zum Zwecke der Stabilisierung zusätzlich eine Muffe vorgesehen, die die Form eines schiefen Hohlquaders aufweist und zur Aufnahme des Klemmteils und des Klemmteilträgers ausgebildet ist. Die Stabilisierung ist der Z-Form des Klemmteils geschuldet. Die Muffe wird über das Klemmteil und den Klemmteilträger geschoben, bevor die Endklemme tatsächlich am PV-Modul verspannt wird. Diese aus dem Z-förmigen Klemmteil, dem Klemmteilträger und der darüber gestülpten Muffe bestehende Einheit, wird auf das Tragprofil aufgesteckt und bis zum äußeren Rand des PV-Moduls geschoben.

Die Montage des eben beschriebenen Endklemmen-Systems ist zeitaufwändig. Die Elemente können nur aufwändig vormontiert werden, so dass die Gefahr besteht, dass sich die zusammengesetzte Einheit auflöst, bevor sie auf einer Baustelle tatsächlich verbaut wird, weil insbesondere die Muffe abrutschen könnte. Die zusammengesetzte Einheit lässt sich schlecht in Längsrichtung der Tragschiene verschieben. Es werden viele Bauteile benötigt, um eine stabile Endklemme zu ermöglichen. Sobald die Muffe über den Klemmteilträger gestülpt ist, ist der Gewindebolzen und zumindest der untere Schenkel der Z-förmigen Klemmteils nicht mehr frei zugänglich. Aufgrund des sich einstellenden Winkels zwischen dem Modulrahmen und dem Endklemmen-System im verspannten Zustand, baut diese Einheit nicht kompakt.

Es ist daher eine Aufgabe der vorliegenden Erfindung ein verbessertes Endklemmen-System sowie ein vereinfachtes Montageverfahren bereitzustellen.

Diese Aufgabe wird durch ein Endklemmen-System für PV-Module mit einem Klemmwinkel, einem Spannbolzen und einem Basiselement gelöst, wobei das Basiselement längsverschieblich und formschlüssig in ein Tragprofil eingreift, auf dem die PV-Modul verspannt befestigt werden, wobei der Klemmwinkel einen Halteschenkel und einen Spannschenkel aufweist, wobei der Halteschenkel eine Öffnung hat, durch die der Spannbolzen bis ins Basiselement geführt ist, wobei das Basiselement auf einer modulabgewandten Seite eine Ausnehmung mit mehreren Stufen aufweist, wobei die Stufen ausgebildet sind, ein freies Ende des Spannschenkels oder eine korrespondierende Verzahnung auf einer modulzugewandten Seite des Spannschenkels höhenverstellbar abzustützen, wobei der Spannbolzen ein Gewindebolzen ist, der durch die Öffnung im Halteschenkel geführt ist, um in eine Gewindeöffnung im Basiselement oder in mindestens einen, im Basiselement gelagerten Gewindestein zwecks Verspannung einzugreifen..

Das System der Erfindung weist wenige Komponenten auf und ist vormontierbar. Die Komponenten des Systems halten zusammen. Die Gefahr, dass eine der Komponenten verloren geht, besteht nicht.

Das System ist auf der Baustelle einfach handhabbar. Die Höhe des Systems lässt sich ohne Probleme an eine Höhe des PV-Moduls anpassen, indem der Klemmwinkel, vorzugsweise gegen eine Federkraft, in seiner vormontierten Stellung aus der stufenförmigen Ausnehmung des Basiselements gelöst und auf eine gewünschte Höhe (Höhe des Modulrahmens) verbracht wird. Die stufenförmige Ausnehmung ist verantwortlich dafür, dass das Basiselement beim Verspannen des Systems nicht gegenüber dem Rand des PV-Moduls schräg verkippt. Die Spannkraft wird flächig über den Halteschenkel in das PV-Modul eingeleitet. Das System baut mit wenigen Komponenten sehr kurz.

Das System kann seitlich auf das Tragprofil aufgesteckt werden. Ein Verschieben des Systems im Tragprofil in der Längsrichtung des Tragprofils ist nicht erforderlich, allenfalls zum Zwecke einer Feinjustierung.

Die Elemente des Systems können verliersicher vormontiert werden, so dass ein Monteur auf der Baustelle die Komponenten nicht erst zusammensetzen muss, um das System zu montieren.

Vorzugsweise erfolgt die Abstützung ausschließlich parallel zu einer Wirkrichtung einer Verspannung. Auf diese Weise ist gewährleistet, dass die gesamte Spannkraft aufgewendet wird, um das PV-Modul sicher mit dem Tragprofil zu verklemmen. Schräg wirkende Kraftkomponenten, die zu einem Verkannten des Systems führen können, sind nicht vorhanden.

Weiter ist es bevorzugt, wenn im verspannten Zustand des Systems der Halteschenkel im Wesentlichen parallel zu einer Oberseite der PV-Module ist und der Spannschenkel im Wesentlichen parallel zu einer Seitenfläche der PV-Module orientiert ist.

Der Halteschenkel sorgt so für eine sichere Verspannung der PV-Module auf dem Tragprofil. Das Basiselement dient zur seitlichen Fixierung des PV-Moduls, so dass dieses nach einer erfolgten Verspannung nicht mehr in einer horizontalen (seitlichen) Richtung beweglich ist.

Weiter ist es bevorzugt, wenn der Halteschenkel und der Spannschenkel im Wesentlichen einen rechten Winkel einschließen, wobei das Basiselement eine Oberseite, eine modulabgewandte Seite und eine modulzugewandte Seite sowie eine Unterseite aufweist, wobei die modulabgewandte Seite und die modulzugewandte Seite sich gegenüberliegen, parallel zueinander orientiert sind und senkrecht zu dem Tragprofil orientiert sind, wenn das Basiselement in Eingriff mit dem Tragprofil ist.

In diesem Zustand kommt es zu keinen Kippmomenten, die eine schräge Krafteinleitung zur Folge haben können. Das System ist stabil, montagesicher und montagefreundlich.

Ferner hat es sich als vorteilhaft herausgestellt, wenn die Öffnung im Halteschenkel ein Langloch mit einer Erstreckung ist, die im verspannten Zustand des Systems senkrecht zur Seitenfläche des PV-Moduls orientiert ist.

Das Langloch ermöglicht die (horizontale gerichtete) Bewegungskomponente, um den Spannschenkel oder dessen Verzahnung außer Eingriff mit der stufenförmigen Ausnehmung des Basiselements zu bringen, um den Klemmwinkel an die Höhe des PV-Moduls anzupassen.

Gemäß einer weiteren bevorzugten Ausführungsform weist der Spannbolzen einen Schaft und einen Kopf auf, wobei der Kopf größer als die Öffnung im Halteschenkel ist und an einem Ende des Schafts vorgesehen ist.

Durch diese Maßnahme hält der Kopf den Klemmwinkel vormontiert am Basiselement fest.

Außerdem hat es sich als vorteilhaft herausgestellt, wenn ferner eine Spiralfeder und/oder eine Unterlegscheibe vorgesehen sind, die auf den Spannbolzen aufgesteckt sind.

Die Federeinrichtung bewirkt eine Vorspannung des Klemmwinkels gegen das Basiselement. Dies ist für die Vormontage vorteilhaft. Der Klemmwinkel rutscht nicht entlang des Spannbolzens auf und ab, so dass ein Transport zur Baustelle geräuschlos erfolgen kann. Die Systeme können alle in einem gleichbleibenden Zustand ausgeliefert werden, bis sie auf einer Baustelle zum Einsatz kommen. Die Feder unterstützt ferner den Montagevorgang, weil sie den Klemmwinkel, sobald dieser in seiner richtigen Höhe eingestellt ist, in der eingestellten Höhe hält.

Weiter ist es bevorzugt, wenn das Basiselement einen trapezförmigen Querschnitt mit zwei sich in einem Winkel gegenüberliegenden Trapezschenkel aufweist, die derart flexibel ausgebildet sind, dass das Basiselement seitlich auf das Tragprofil aufklemmbar ist.

Die oben genannte Aufgabe wird ferner durch ein Verfahren zum Befestigen eines PV-Moduls auf einem Tragprofil in einem äußeren Randbereich des PV-Moduls, den kein anderes PV-Modul gegenüberliegt, gelöst, und zwar unter Verwendung eines Endklemmen-Systems gemäß der Erfindung, wobei das Verfahren die folgenden Schritte umfasst: seitliches, formschlüssiges Aufstecken des Basiselements auf das Tragprofil an einem Ort einer gewünschten Fixierung; Bewegen des Klemmwinkels relativ zum Basiselement, so dass der Halteschenkel auf einer Oberseite des PV-Moduls aufwiegt und so dass der Spannschenkel in die stufenförmige Ausnehmung der modulabgewandten Seite des Basiselements eingreift; und Verspannen des Klemmwinkels mit dem Basiselement durch Bewegen des Klemmschenkels senkrecht zum Tragprofil, indem der Spannbolzen angezogen wird.

Weiter ist es bevorzugt, wenn das Verfahren ein Verschieben des Basiselements in Längsrichtung des Tragprofils aufweist, so dass das Basiselement mit einer modulzugewandten Seite an einer Seitenfläche des PV-Moduls anliegt.

Außerdem ist es von Vorteil, wenn der Spannbolzen durch den Halteschenkel durchgeführt und der durchgeführte Spannbolzen mit dem Basiselement verbunden wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Endklemmen-Systems gemäß der Erfindung in einem verspannten Zustand;
- Fig. 2A-C: verschiedene Ansichten des Endklemmen-Systems der Fig. 1 in isolierter Darstellung;
- Fig. 3A-C: verschiedene Ansichten eines Klemmwinkels, wie er in den Figuren 1 und 2 gezeigt ist;
- Fig. 4A-D: verschiedene Ansichten eines Basiselements, wie es in den Figuren 1 und 2 gezeigt ist;
- Fig. 5A-C: verschiedene Ansichten eines abgewandelten Endklemmen-Systems; und
- Fig.6: ein Flussdiagramm eines Montageverfahrens gemäß der Erfindung.

In der nachfolgenden Beschreibung werden gleiche Elemente mit den gleichen Bezugszeichen versehen. Das erfindungsgemäße Endklemmen-System wird generell mit dem Bezugszeichen 10 bezeichnet.

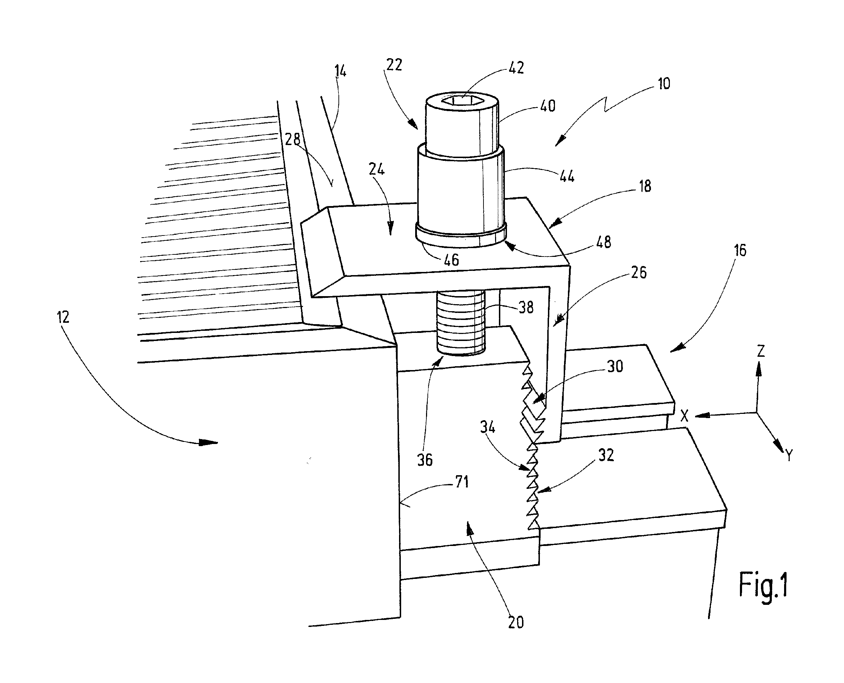

Fig. 1 zeigt eine perspektivische Ansicht auf eines ersten Endklemmen-Systems 10 in einem verspannten Zustand. Mit dem System 10 wird ein (hier gerahmtes) PV-Modul 12 über seinen äußeren Rahmen 14 auf ein Tragprofil 16 geklemmt. Bei dem Tragprofil 16 kann es sich um eine (stranggepresste) Profilschiene handeln, die sich im Wesentlichen in der Längsrichtung X erstreckt. Eine Querrichtung ist mit Y bezeichnet. Die Vertikale ist mit Z bezeichnet.

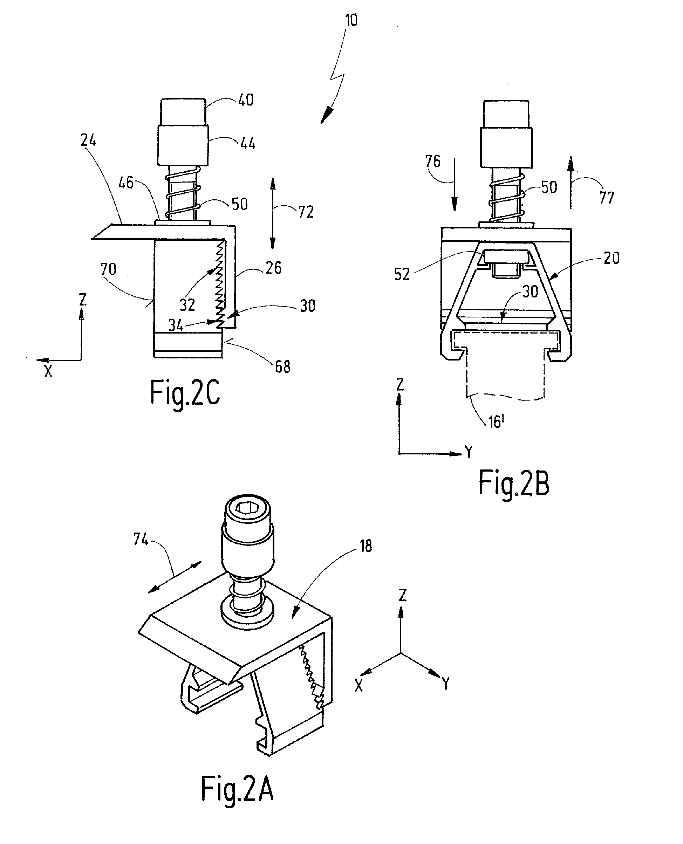

Das System 10 weist einen, vorzugsweise L-förmigen, Klemmwinkel 18, ein Basiselement 20 sowie einen Spannbolzen 22 auf, der vorzugsweise als Gewindebolzen realisiert ist und in das Basiselement 20 eingreift. Der Klemmwinkel 18 weist einen Halteschenkel 24 zur Auflage auf dem PV-Modul 12 sowie einen Spannschenkel 26 zur Kopplung des Klemmwinkels 18 an das Basiselement 20 auf. Der Halteschenkel 24 liegt im verspannten Zustand auf einer Oberseite 28 des PV-Moduls 12 bzw. des Rahmens 14 flächig auf. Die Verbindung des Halteschenkel 24 mit dem Basiselement 20, welches formschlüssig in das Tragprofil 16 eingreift, wie es nachfolgend noch näher erläutert werden wird, erfolgt über eine Verzahnung 30, die an einem freien Ende des Spannschenkels 26 auf einer dem PV-Modul 12 zugewandten Seite angeordnet ist. Die Verzahnung 30 des Spannschenkels 26 wechselwirkt mit einer, vorzugsweise stufenförmigen, Ausnehmung 32 auf einer modulabgewandten Seite 68 (Fig. 2C) des Basiselements 20. Die Ausnehmung 32 ist hier so geformt, dass sie mit der Verzahnung 30 formschlüssig zusammenwirkt. Die Ausnehmung 32 weist hier eine Vielzahl von vertikal übereinander angeordneten Stufen 34 auf.

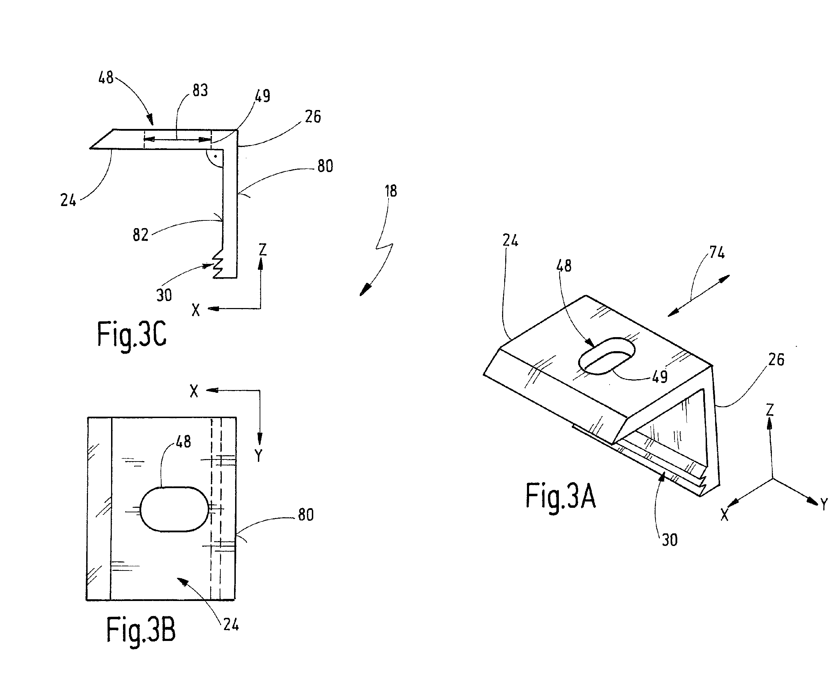

Um den Klemmwinkel 18 in der negativen Z-Richtung vertikal nach unten auf das PV-Modul 12 zu drücken, wird der Spannbolzen 22 angezogen. Der Spannbolzen 22 greift mit seinem (Gewinde-)Schaft 38 in eine (Gewinde-)Öffnung 36 im Basiselement 20. Der Kopf 40 des Spannbolzens 22 weist eine Aufnahme 42, z.B. eine Sechskantschlüssel-Aufnahme, auf, um den Gewindeschaft 38 weiter in die Öffnung 36 einzudrehen. Der Kopf 40 ist frei zugänglich. Unterhalb des Kopfs 40 kann eine Hülse 44 vorgesehen sein, die eine Unterlegscheibe 46 auf eine Oberseite des Halteschenkels 24 drücken kann. Die Oberseite des Halteschenkels 24 weist eine in der Fig. 1 nicht näher dargestellte Öffnung 48 auf, die z.B. in Form eines Langlochs 49 (Fig. 3) realisiert sein kann, das sich im verspannten Zustand des Systems 10 parallel zur Längsrichtung X erstreckt. Der Spannbolzen 22 greift durch die Öffnung 48 in das Basiselement 20. Über die Hülse 44 und die Unterlegscheibe 46 lässt sich die vom Spannbolzen(-kopf) ausgehende Verspannkraft gleichmäßiger auf den Halteschenkel 24 verteilen. Die Hülse 44 kann ferner benutzt werden, um eine hier nicht näher dargestellte Federeinrichtung aufzunehmen, die nachfolgend unter Bezugnahme auf die Fig. 2 noch näher beschrieben werden wird.

Im verspannten Zustand des Systems 10 liegt das Basiselement 20 mit seiner modulzugewandten Seite 70 vorzugsweise bündig an dem Rahmen 14 des PV-Moduls 12 an. Solange der Spannbolzen 22 nicht verspannt wird, kann der Klemmwinkel 18 sowohl in der Längsrichtung X als auch in der Vertikalen Z relativ zum Basiselement 20 bewegt werden, insbesondere um Höhenverstellungen durchzuführen. Trotzdem bilden der Klemmwinkel 18 und das Basiselement 20 eine verliersichere Einheit, d.h. die Komponenten bilden einen unlösbaren Verbund, der durch den Halt des Spannbolzens 22 in der Öffnung 36 ermöglicht wird. Je nach Höhe des verwendeten PV-Moduls 12 kann der Klemmwinkel 18 mit seiner Verzahnung 30 am Spannschenkel 26 in eine gewünschte Höhe relativ zum Basiselement 20 gebracht werden, so dass der Halteschenkel 24 auf der Oberseite 28 aufliegt. Die Verzahnung 30, die hier in Form von exemplarisch drei sich in der Y-Richtung erstreckenden Zahnleisten implementiert ist, greift in entsprechend ausgebildete Stufen 34 ein. Wäre das PV-Modul 12 der Fig. 1 flacher, so würde die Verzahnung 30 in der Fig. 1 in tiefer gelegene Stufen 34 der Ausnehmung 32 im Basiselement 20 eingreifen. Sobald der Klemmwinkel 18 vormontiert ist, d.h. die Modulhöhe annährend voreingestellt ist, kann der Spannbolzen 22 angezogen werden, um das PV-Modul 12 auf den Tragprofil 16 sicher zu fixieren. Dies wird nachfolgend noch detaillierter beschrieben werden.

Die Figuren 2A-2C zeigen das Endklemmen-System 10 der Fig. 1 in einem Vormontagezustand. Dies bedeutet, dass das System 10 noch nicht auf dem Tragprofil 16 zum Zwecke der Fixierung eines PV-Moduls 12 verspannt ist.

Fig. 2A zeigt eine perspektivische Ansicht des Systems 10. Fig. 2B zeigt eine Vorderansicht des Systems 10, wenn man in der Längsrichtung X auf das System 10 schaut. Fig. 2C zeigt eine Seitenansicht, wenn man entlang der Y-Richtung auf das System 10 schaut. Nachfolgend wird das System 10 unter gemeinsame Bezugnahme auf die Figuren 2A-2C beschrieben werden.

Im freien Zustand des Systems 10 kann der Klemmwinkei 18 in einer tiefsten Stellung vormontiert sein. In der tiefsten Stellung liegt der Halteschenkel 24 vorzugsweise auf dem Basiselement 20 auf. Die Verzahnung 30 des Spannschenkels 26 greift in die untersten drei Stufen 34 der Ausnehmung 32 im Basiselement 20 ein. Es versteht, dass die Länge des Halteschenkels 24 in der X-Richtung sowie die Höhe des Spannschenkels 26 in der Z-Richtung variiert werden kann. Die Höhe des Spannschenkels 26 kann auch so gewählt sein, dass der Halteschenkel 24 im freien Zustand nicht auf dem Basiselement 20 ruht, sondern einen Abstand zur Oberseite des Basiselements 20 aufweist. Dies bedeutet mit anderen Worten, dass über die Höhe des Spannschenkels 26 eine weitere Möglichkeit besteht, unterschiedlich hohe PV-Module 12 fixieren zu können (Baukastensystem). Eine effektive Höhe (Projektion auf die Z-Achse) der Ausnehmung 32 im Basiselement 20 definiert eine Höhenverstellbarkeit eines spezifischen Klemmwinkels 18.

Die oben bereits erwähnte Federeinrichtung ist in der Fig. 2 in Form einer Spiralfeder 50 gezeigt, die über den Schaft 38 des Spannbolzens 22 aufgeschoben ist und sich entweder am Kopf 40 des Spannbolzens 22 oder an einem Deckel der Hülse 44 abstützt. Ein gegenüberliegendes Ende der Spiralfeder 50 stützt sich an der Unterlegscheibe 46 ab, sofern vorhanden. Wenn die Unterlegscheibe 46 nicht vorhanden ist, stützt sich die Spiralfeder 50 direkt an der Oberseite des Halteschenkels 24 ab. Der Durchmesser der Spiralfeder 50 ist so gewählt, dass die Spiralfeder nicht durch die Öffnung 48 im Halteschenkel 24 passt. Die Hülse 44 ist so dimensioniert, dass sie auf den Schaft 38 des Spannbolzens 22 aufsteckbar ist und am Kopf 40 des Spannbolzens 22 anliegt. Die Hülse 44 dient zum einen zur Aufnahme der (zusammengedrückten) Spiralfeder 50 im verspannten Zustand des Systems 10, wie es exemplarisch in der Fig. 1 gezeigt ist. Die Hülse 44 dient des Weiteren einer gleichmäßigeren Krafteinleitung vom Kopf 40 in den Halteschenkel 24 während eines Verspannvorgangs, da die Hülse 44 üblicherweise einen größeren Durchmesser als der Kopf 40 aufweist und somit das Verhältnis Krafteinwirkung über dem Langloch und über dem Halteschenkel besser ist.

Das Basiselement 20 weist in der Seitenansicht der Fig. 2C einen im Wesentlichen rechteckigen Querschnitt auf. In der Vorderansicht gemäß der Fig. 2B kann das Basiselement 20 einen trapezförmigen Querschnitt aufweisen. Ein rechteckiger Querschnitt wäre aber auch denkbar. Die Ausnehmung 32 mit den Stufen 34 ist in der modulabgewandten Seite 68 (vgl. Fig. 2C) des Basiselements 20 vorgesehen. Die modulabgewandte Seite 68 liegt einer modulzugewandten Seite 70 des Basiselements 20 gegenüber. Die Seiten 68 und 70 sind parallel zueinander orientiert und stehen im verspannten Zustand vorzugsweise senkrecht zur Oberseite des Tragprofils 16 bzw. parallel zum Rand des PV-Moduls 12. Die modulzugewandte Seite 70 schließt im verspannten Zustand vorzugsweise flächig an den Rand des PV-Moduls 12 an.

Wenn die Öffnung 36 im Basiselement 20 nicht selbst mit einem Innengewinde.zur Aufnahme des Gewindeschafts 38 versehen ist, kann z.B. ein Gewindestein 52 im Inneren des Basiselements 20 vorgesehen sein, der durch nachfolgend noch näher erläuterte Arme fixiert ist.

In Fig. 2B ist ein im Vergleich zur Fig. 1 abgewandeltes Tragprofil 16' mit einer geschlossenen Oberseite gezeigt. Das Basiselement 20 wird vorzugsweise seitlich, d.h. im Wesentlichen parallel zur Y-Richtung, durch Drehung um eine Randkante des Tragprofils 16 auf das Tragprofil 16 bzw. 16' aufgesteckt. Das Basiselement 20 ist flexibel ausgebildet und weist in einem Bereich, der mit dem Tragprofil 16 in Kontakt kommt, z.B. eine Nut-Feder-Verbindung auf, wie sie exemplarisch in der Fig. 2B angedeutet ist. Es versteht sich, dass aufgrund der Möglichkeit, dass das Basiselement 20 seitlich auf das Tragprofil 16 aufgesteckt wird, ein gewisses Spiel in der Z-Richtung im Bereich der Nut-Feder-Verbindung erforderlich ist. Dieses Spiel begründet grundsätzlich die Gefahr, dass das Basiselement beim Verspannen des Systems 10 verkippt wird (Fig. 2C zeigt eine senkrechte Ausrichtung). Verkippt das Basiselement 20, so liegt die modulzugewandte Seite 70 nicht mehr bündig an dem PV-Modul 12 an. Einen derartigen Zustand gilt es zu vermeiden. Dieser Zustand wird durch das Zusammenspiel der Verzahnung 30 mit der stufenförmigen Ausnehmung 32 vermieden, weil die Stufen 34 immer eine Krafteinleitungsfläche bieten, die nicht allein parallel zur Randseite des PV-Moduls 12 orientiert ist. Durch die Stufen 34 kommt es zu keinen Hebelmomenten, die ein Verkippen des Basiselements 20 relativ zum Tragprofil 16 hervorrufen können. Wenn das Basiselement 20 im verspannten Zustand nicht verkippt ist, liegt der Halteschenkel 24 automatisch flächig auf der Oberseite 28 des PV-Moduls 12 auf. Der Halteschenkel 24 ist dann parallel zur Oberseite 28 des PV-Moduls 12 orientiert. Das Basiselement 20 liegt dann flächig am Rand des PV-Moduls 12 an.

Unter gemeinsamer Bezugnahme auf die Figuren 3A-3C wird nachfolgend der Klemmwinkel 18 näher beschrieben werden, wie er in den vorhergehenden Figuren gezeigt ist. Die Fig. 3A zeigt eine perspektivische Ansicht. Die Fig. 3B zeigt eine Draufsicht. Fig. 3C zeigt eine Seitenansicht entlang der Y-Richtung.

Der Halteschenkel 24 und der Spannschenkel 26 schließen vorzugsweise einen rechten Winkel miteinander ein (vgl. Fig. 3C). Die Länge der Schenkel 24 und 26 kann beliebig variiert werden.

An einer modulzugewandten Seite 82 des Spannschenkels 26 ist die Verzahnung 30 vorgesehen. Die Verzahnung 30 weist eine oder mehrere Zahnleisten auf, die im z.B. einen dreieckigen Querschnitt haben. Die Zahnleisten erstrecken sich über eine gesamte Breite (parallel zur Y-Richtung) des Spannschenkels 26, um unabhängig von einer einzustellende Höhe sicher in die Stufen 34 des Basiselements 20 einzugreifen. Der horizontale Abstand zwischen zwei benachbarten Stufen 34 ist höhenabhängig. Je höher die Verzahnung 30 in Eingriff mit den Stufen 34 im Basiselement 20 kommt, desto geringer sind die Relativabstände benachbarter Stufen 34 gleicher Höhe. Um aber auch sicher in die unterste Stufe 34 in der stufenförmigen Ausnehmung 32 des Basiselements 20 einzugreifen, empfiehlt es sich, die Zahnleisten über die gesamte Breite des Spannschenkels 26 vorzusehen.

Auf einer modulabgewandten Seite 80 des Spannschenkels 26 ist keine Verzahnung 30 vorgesehen.

Die Öffnung 48, die vorzugsweise als Langloch 49 ausgebildet ist, befindet sich im Halteschenkel 24. Der Halteschenkel 24 ist an seinem freien Ende zugespitzt ausgebildet. Dieses Merkmal ist optional.

Das Langloch 49 ist vorzugsweise mittig in der Breite des Klemmwinkels 18 angeordnet. Das Langloch 49 erstreckt sich parallel zur Längsrichtung X des Tragprofils 16. Das Langloch 49 sollte sich senkrecht zur Längserstreckung der Seitenwand des PV-Moduls 12 erstrecken, um den Klemmwinkel 18 beim Einstellen einer gewünschten Modulhöhe vom PV-Modul 12 wegbewegen zu können, damit die Verzahnung 30 außer Eingriff mit der stufenförmigen Ausnehmung 32 kommt. Die Ausrichtung des Langlochs 49 ist in Fig. 3C in Form einer Erstreckung 83 angedeutet, die sich parallel zur X-Richtung erstreckt.

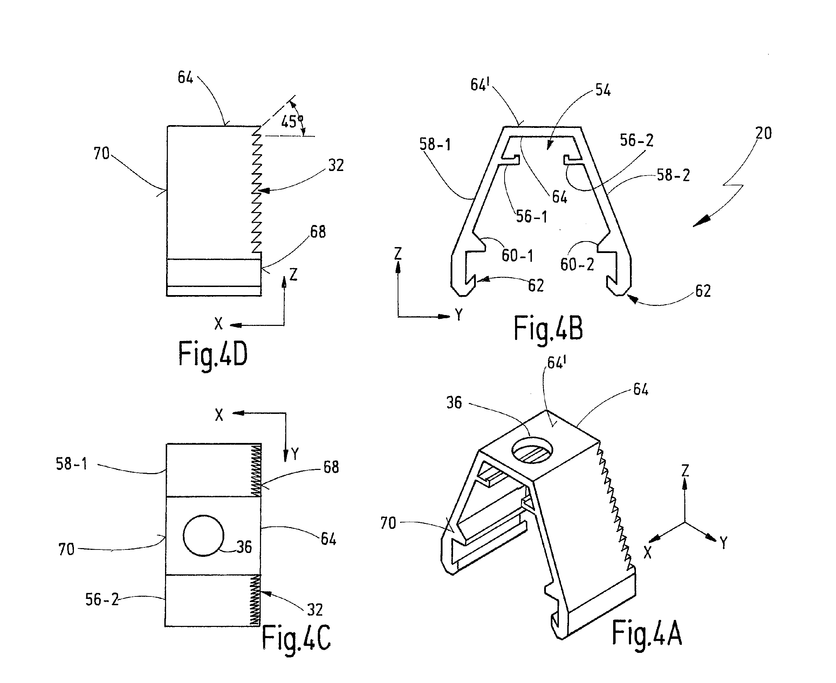

Die Figuren 4A-4D zeigen verschiedene Ansichten des in den Figuren 1 und 2 gezeigten Basiselements 20. Das Basiselement 20 wird nachfolgend detaillierter unter gemeinsame Bezugnahme auf alle Ansichten der Figuren 4A-4D beschrieben werden. Fig. 4A zeigt eine perspektivische Ansicht. Fig. 4B zeigt eine Vorderansicht. Fig. 4C zeigt eine Draufsicht und Fig. 4D zeigt eine Seitenansicht.

In der Vorderansicht der Fig. 4B ist die optionale Trapezform (Querschnitt) des Basiselements 20 gut zu erkennen. Der in der Fig. 2B bereits gezeigte Gewindestein 52 ist in einer Nut 54 platzierbar, die durch zwei seitliche Stützarme 56 definiert ist, die einen Spalt zwischen sich lassen, um den Spannbolzen 22 durchzulassen. Die Stützarme 56 stehen horizontal aus den schräg angeordneten Trapezschenkeln 58-1 und 58-2 hervor. An den Trapezschenkeln 58 sind innenseitig Füße 60-1 und 60-2 zur Abstützung der Trapezschenkel 58 an der Oberseite des Tragprofils 16 vorgesehen. Anstatt der C-förmigen Backenabschnitte, wie sie exemplarisch in Fig. 2B gezeigt sind, können an den freien Enden der Trapezschenkel 58 z.B. widerhakenförmige Abschnitte 62 vorgesehen sein. Die widerhakenförmige Ausgestaltung der Abschnitte 62 ist jedoch lediglich optionaler Natur.

Die Trapezschenkel 58 sind über einen horizontal orientierten Verbindungsschenkel 64 miteinander verbunden. In einer Oberseite 64' des Verbindungsschenkels 64 ist die Öffnung 36 (vgl. Fig. 1) vorgesehen. Die Öffnung 36 ist hier ohne Gewinde ausgebildet, da bei der dargestellten Ausführungsform des Basiselements 20 ein Gewindestein 52 zum Einsatz kommt, der das Gewinde für den Spannbolzen 22 aufweist.

Die stufenförmige Ausnehmung 32 ist in der Seitenansicht der Fig. 4D gut zu erkennen. Die Draufsicht der Fig. 4C zeigt, dass jeder der Trapezschenkel 58-1 und 58-2 eine gleiche Anzahl von gleich beabstandeten Stufen 34 aufweist, die sich auf gleicher Höhe paarweise gegenüberliegen, um mit der Verzahnung 30 des Spannschenkels 26 in Eingriff zu kommen. In der Draufsicht der Fig. 4C ist der veränderliche Relativabstand zwischen den Stufen 34 auf gleicher Höhe (in Z-Richtung) gut zu erkennen. Die Stufen 34 sind exemplarisch in Form einer Sägezahnprofils ausgebildet. Die Zähne haben einen Winkel von z.B. 45° (vgl. Fig. 4D). Die horizontale Fläche einer Stufe 34 dient zur Einleitung der vertikalen Kraftkomponente beim Verspannen des Systems 10. Die schräge Fläche der Stufe 34 vereinfacht das Einführen der Verzahnung 30 in die stufenförmige Ausnehmung 32. Es versteht sich, dass der Winkel der Stufen 34 variabel gewählt werden kann. Um ein allzu leichtes Abrutschen der Verzahnung 30 aus der stufenförmigen Ausnehmung 32 im unverspannten Zustand des Systems 10 zu unterbinden, kann der in der Fig. 4D horizontal dargestellte Teil der Stufe 34 auch leicht angeneigt werden, so dass der Winkel von 45° etwas spitzer wird, z.B. nur noch 40° einschließt. Der (untere) Teil der Stufe 34 wäre dann gegenüber der Horizontalen z.B. mit 5° geneigt.

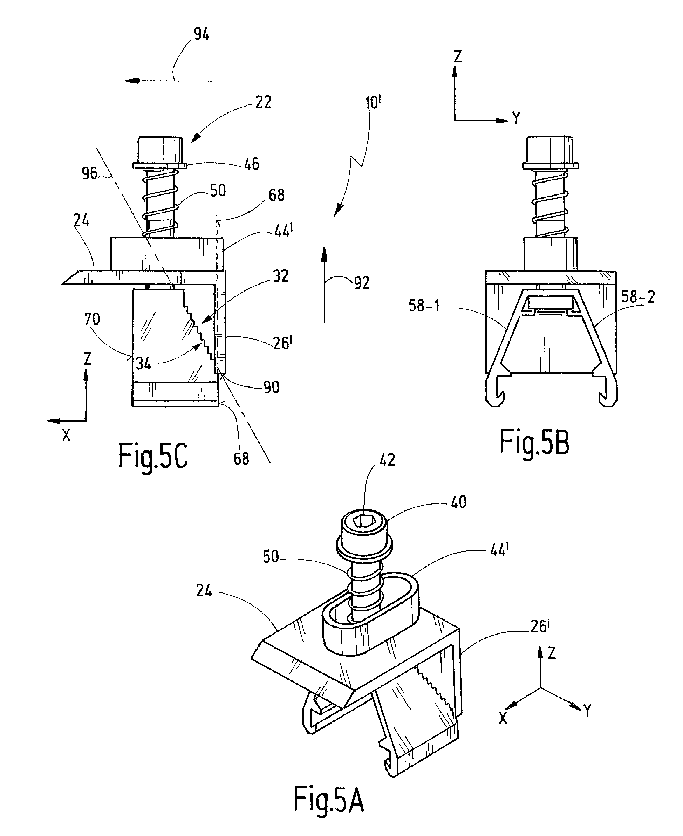

Die Figuren 5A-5C zeigen eine zweite Ausführungsform des Systems 10 der Fig. 1. Fig. 5A zeigt eine perspektivische Ansicht. Fig. 5B zeigt eine Vorderansicht und Fig. 5C zeigt eine Seitenansicht des Systems 10.

Beim System 10 der Fig. 5 weist der Spannschenkel 26' auf keiner seiner Seiten 80 und 82 eine Verzahnung 30 auf. Die stufenförmige Ausnehmung 32 ist so ausgebildet, dass sie sich entlang einer imaginären Linie 96 orientiert, die einen spitzen Winkel mit der modulabgewandten Seite 68 des Basiselements 20 definiert. Die Stufen 34 der Ausnehmung 32 sind rechtwinklig, so dass ein erster Abschnitt jeder Stufe horizontal und ein zweiter Abschnitt vertikal orientiert ist. Selbstverständlich können sie jeweiligen Abschnitte auch leicht gegenüber der Horizontalen und der Vertikalen geneigt sein, z.B. mit 5-10%, wobei der Spannschenkel 26 entsprechend angepasst ist. Die Stufen 34 sind auf die Geometrie des freien Ende des Spannschenkels 26 abgestimmt. Der Spannschenkel 26 weist eine Unterseite 90 auf, die formschlüssig in die Stufen 34 passt. Die Unterseite 90 sitzt im verspannten Zustand formschlüssig in einer der Stufen 34.

Das System 10 der Fig. 5 weist weitere Abwandlungen gegenüber der Fig. 2 auf. Die Unterlegscheibe 46 ist hier zwischen dem Kopf 40 und der Spiralfeder 50 angeordnet. Die Spiralfeder 50 stützt sich mit ihrem gegenüberliegenden Ende am Halteschenkel 24 ab. Die Hülse 44' ist fest am Halteschenkel 24 angeformt und nicht mehr als lose bewegliche Hülse 44 ausgebildet, wie sie exemplarisch in den Figuren 2A-2C gezeigt war.

Es versteht sich, dass die Hülsen 44 und 44' sowie die Federeinrichtung weggelassen werden können, ohne die Funktionalität des Systems 10 einzuschränken. Die Hülse 44 und 44' in Kombination mit der Spiralfeder 50 dient lediglich dem Montagekomfort auf der Baustelle. Die Spiralfeder 50 bewirkt, dass der Klemmwinkel 18 während einer Höhenverstellung in Richtung der stufenförmigen Ausnehmung 32 vorgespannt ist, so dass der Monteur nach einer erfolgten Höhenanpassung den Halteschenkel 24 einfach wieder loslassen kann, um das System 10 anschließend mit freien Händen zu verspannen.

Im Nachfolgenden wird beschrieben, wie das System 10 der Erfindung während einer Montage eingesetzt wird.

Üblicherweise ist das System 10 vormontiert. Dies bedeutet, dass sich das System 10 zuerst in einem Zustand gemäß den Figuren 2 und 5 befindet. Der Klemmwinkel 18 ist verliersicher über den Spannbolzen 22 mit dem Basiselement 20 verbunden. Der Klemmwinkel 18 ist vorzugsweise in der tiefsten Stellung angeordnet. Der Klemmwinkel 18 wird durch die Feder 50 dort vorgespannt gehalten.

Zu Beginn der Montage des Systems 10 gibt es dann zwei Möglichkeiten, wie gestartet werden kann. Entweder wird das System 10 in seiner Ausgangsstellung, wie sie in den Figuren 2 und 5 gezeigt ist, mit dem Basiselement 20 seitlich auf das Tragprofil 16 aufgesteckt. Dazu wird z.B. der linke Endabschnitt 62 des linken Trapezschenkels 58-1 (vgl. Fig. 4b) am linken überragenden Rand des Tragprofils 16 ausgerichtet. Danach wird das Basiselement 20 leicht um diesen eingehängten Abschnitt 62 gedreht, so dass der zweite Trapezschenkel 58-2 über die Oberseite des Tragprofils 16 hinweg in Richtung des gegenüberliegenden Rands des Tragprofils 16 bewegt wird. Anschließend wird der rechte Trapezschenkel 58-2 unter einer Verformung des Basiselements 20 nach unten gepresst, so dass ich der Abschnitt 62 des rechten Trapezschenkels 58-2 um den überragenden freien Rand des Tragprofils 16 stülpt. Die dazu erforderliche Flexibilität ist dem Basiselement 20 inhärent. Insbesondere der Verbindungsschenkel 64 ist derart flexibel ausgestaltet, dass der Trapezschenkel 58-2 über den Rand des Tragprofils 16 hinausbewegt werden kann. Anschließend schnappt der Abschnitt 62 zurück und man erhält die in der Fig. 2B exemplarisch dargestellte Situation.

Je nachdem, ob man die Höhe des Klemmwinkels 18 relativ zum Basiselement bereits vorab eingestellt hatte oder nicht, kann nun die Relativhöhe in Abhängigkeit der Höhe der Seitenfläche 71 (vgl. Fig. 1) des Rahmens 14 eingestellt werden. Der Spannbolzen 22 ist in diesem Zustand noch nicht verspannt und lässt eine Bewegung des Klemmwinkels 18 gegen die Feder 50 zu. Um die Verzahnung 30 aus der stufenförmigen Ausnehmung 32 zu lösen, kann das Klemmwinkel 18 entweder zuerst horizontal und dann anschließend vertikal bewegt werden, oder der Klemmwinkel 18 kann direkt schräg aus den Stufen 34 herausgezogen werden.

Wenn die Einstellung der Höhe erst erfolgt, nachdem das Basiselement 20 auf das Tragprofil 16 gesteckt wurde, wird das System 10 anschließend an die Seitenfläche 71 (Fig. 1) in Längsrichtung X des Tragprofils 16 geschoben. Die Verschiebung ist möglich, da zwischen den backenförmigen Abschnitten 62 der Trapezschenkel 58 und dem überragenden Rand des Tragprofils 16 ein gewisses Spiel in der Höhenrichtung Z vorhanden ist.

Wurde die Höhe bereits vorab eingestellt, kann das Basiselement 20 natürlich direkt an der vorgewünschten Position am Rahmen 14 des PV-Moduls 12 aufgesteckt werden.

Anschließend wird das System 10 verspannt, indem der Spannbolzen 22 in Richtung des Basiselements 20 bewegt wird. Dadurch wird Druck auf den Halteschenkel 24 und den Spannschenkel 26 ausgeübt. Der Druck auf den Halteschenkel 24 bewirkt, dass das PV-Modul 12 mit dem Tragprofil 16 verklemmt wird. Der Druck auf den Spannschenkel 26 bewirkt, dass das Basiselement wegen der Verzahnung 30 bzw. des Bodens 90 nicht gegenüber der Horizontalen verkippt, die durch die Oberseite des Tragprofils 16 definiert ist.

Selbstverständlich können die einzelnen Komponenten 18 - 22 des Systems 10 auch erst auf der Baustelle miteinander verbunden werden. Das Basiselement 20, der Spannbolzen 22 und der Klemmwinkel 18 sind dann nicht vormontiert. Die Montage dieser drei Komponenten ist zeitaufwändig und sollte deshalb nicht auf der Baustelle erfolgen.

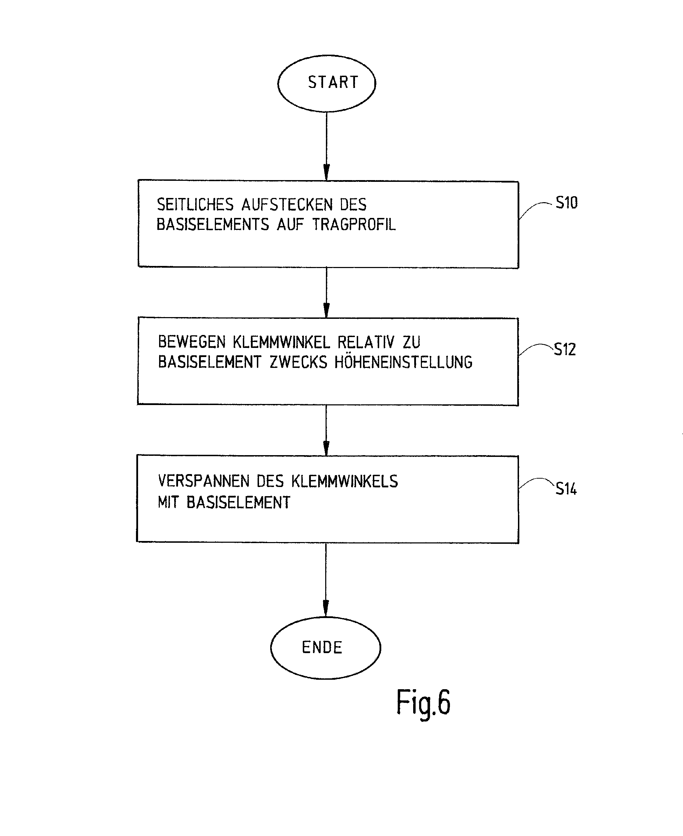

Die Schritte der Montage auf der Baustelle sind schematisch im Flussdiagramm der Fig. 6 gezeigt. In einem ersten Schritt S10 wird das Basiselement 20 seitlich auf das Tragprofil 16 aufgesteckt. In einem Schritt S12 wird der Klemmwinkel relativ zum Basiselement 20 zwecks einer Höheneinstellung bewegt. In einem Schritt S14 wird der Klemmwinkel über den Spannbolzen mit dem Basiselement verspannt.

Gleiche Teile und Merkmale wurden mit gleichen Bezugszeichen versehen. Die in der Beschreibung enthaltenen Offenbarungen sind sinngemäß auf gleiche Teile und Merkmale mit denselben Bezugszeichen übertragbar. Lage- und Orientierungsangaben (z.B. "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

## Patentansprüche

1. Endklemmen-System (10) für PV-Module (12) mit einem Klemmwinkel (18), einem Spannbolzen (22) und einem Basiselement (20; 20'), wobei das Basiselement (20) längsverschieblich und formschlüssig in ein Tragprofil (16) eingreift, auf dem die PV-Module (12) verspannt befestigt werden, wobei der Klemmwinkel (18) einen Halteschenkel (24) und einen Spannschenkel (26) aufweist, wobei der Halteschenkel (24) eine Öffnung (48) hat, durch die der Spannbolzen (22) geführt ist, wobei das Basiselement (20) auf einer modulabgewandten Seite (68) eine Ausnehmung (32) mit mehreren Stufen (34) aufweist, wobei die Stufen (34) ausgebildet sind, ein freies Ende des Spannschenkels (26) oder eine korrespondierende Verzahnung (30) auf einer modulzugewandten Seite (82) des Spannschenkels (26) höhenverstellbar (72) abzustützen, wobei der Spannbolzen (22) ein Gewindebolzen ist, der durch die Öffnung (48) im Halteschenkel (24) geführt ist, und in eine Gewindeöffnung (36) im Basiselement (20) oder in mindestens einen im Basiselement (20) gelagerten Gewindestein (52) zwecks Verspannung eingreift.

2. System nach Anspruch 1, wobei die Abstützung ausschließlich parallel zu einer Wirkrichtung (77) einer Verspannung erfolgt.

3. System nach Anspruch 1 oder 2, wobei im verspannten Zustand des Systems (10) der Halteschenkel (24) im Wesentlichen parallel zu einer Oberseite (28) der PV-Module (12) und der Spannschenkel (26) und das Basiselement (20) im Wesentlichen parallel zu einer Seitenfläche (71) der PV-Module (12) orientiert sind.

4. System nach einem der Ansprüche 1 bis 3, wobei der Halteschenkel (24) und der Spannschenkel (26) im Wesentlichen einen rechten Winkel einschließen und wobei das Basiselement (20) eine Oberseite (64'), eine modulabgewandte Seite (68), eine modulzugewandte Seite (70) und eine Unterseite aufweist, wobei die Seiten (68, 70):
sich gegenüber liegen,
parallel zueinander orientiert sind, und
senkrecht zu dem Tragprofil (16) orientiert sind, wenn das Basiselement (20) im Eingriff mit der Tragschiene (16) ist.

5. System nach einem der Ansprüche 1 bis 4, wobei die Öffnung (48) im Halteschenkel ein Langloch (49) mit einer Erstreckung ist, die im verspannten Zustand des Systems (10) senkrecht zur Seitenfläche (71) des PV-Moduls (12) orientiert ist.

6. System nach einem der Ansprüche 1 bis 5, wobei der Spannbolzen (22) einen Schaft (38) und einen Kopf (40) aufweist, wobei der Kopf (40) größer als die Öffnung (48) im Halteschenkel (24) ist und an einem Ende des Schafts (38) vorgesehen ist.

7. System nach einem der Ansprüche 1 bis 6, wobei ferner eine Spiralfeder (50) und/oder eine Unterlegscheibe (46) vorgesehen sind, die auf den Spannbolzen (22) aufgesteckt sind.

8. System nach einem der Ansprüche 1 bis 7, wobei das Basiselement (20) einen trapezförmigen Querschnitt mit zwei sich in einem Winkel gegenüberliegenden Trapezschenkeln (58) aufweist, die derart flexibel ausgebildet sind, dass das Basiselement (20) seitlich auf das Tragprofil (16) aufklemmbar ist.

9. Verfahren zum Befestigen eines PV-Moduls (12) auf einem Tragprofil (16) in einem äußeren Randbereich des PV-Moduls (12), dem kein anderes PV-Modul (12) gegenüber liegt, unter Verwendung eines Endklemmen-Systems nach einem der Ansprüche 1 bis 8, mit den folgenden Schritten:
Seitliches, formschlüssiges Aufstecken des Basiselements (20) auf das Tragprofil (16) an einem Ort einer gewünschten Fixierung;
Bewegen des Klemmwinkels (18) relativ zum Basiselement (20), so dass der Halteschenkel (24) auf einer Oberseite (28) des PV-Moduls (12) aufliegt und so dass der Spannschenkel (26) in die stufenförmige Ausnehmung (32) der modulabgewandten Seite (68) des Basiselements (20) eingreift; und
Verspannen des Klemmwinkels (18) mit dem Basiselement (20) durch Bewegen des Klemmwinkels senkrecht zum Tragprofil (16), indem der Spannbolzen (22) angezogen wird.

10. Verfahren nach Anspruch 9, das zusätzlich aufweist:
Verschieben des Basiselements (20) in Längsrichtung (X) des Tragprofils (16), so dass das Basiselement (20) mit einer modulabgewandten Seite (70) an einer Seitenfläche (71) des PV-Moduls (12) anliegt.

11. Verfahren nach Anspruch 9 oder 10, das des Weiteren aufweist:
Durchführen des Spannbolzens (22) durch den Halteschenkel (24) und Verbinden des durchgeführten Spannbolzens (22) mit dem Basiselement (20).
